# EUROPÄISCHE PATENTSCHRIFT

(11) **EP 1 168 978 B1**
(45) Veröffentlichungstag und Bekanntmachung des Hinweises auf die Patenterteilung: **01.06.2005**
(21) Anmeldenummer: 00910784.8
(22) Anmeldetag: 08.03.2000
(51) Int. Cl.: A61C 5/02, B23C 3/32

(54) **VERFAHREN ZUR HERSTELLUNG ENDODONTISCHER INSTRUMENTE**
METHOD FOR PRODUCING ENDODONTIC INSTRUMENTS
PROCEDE DE PRODUCTION D'INSTRUMENTS ENDODONTIQUES

(30) Priorität: 09.04.1999 DE 19916103
(43) Veröffentlichungstag der Anmeldung: 09.01.2002
(73) Patentinhaber: 3M ESPE AG, 82229 Seefeld (DE)
(72) Erfinder: WAGNER, Ingo, D-82211 Herrsching (DE); KNEE, Michael, D-82380 Peissenberg (DE); NITSCH, Andreas, D-86923 Finning (DE)
(86) Internationale Anmeldenummer: PCT/EP2000/001992
(87) Internationale Veröffentlichungsnummer: WO 2000/061026

(56) Entgegenhaltungen:
- DE-U- 7 704 513
- US-A- 4 611 509
- US-A- 5 655 950

## Beschreibung

Die Erfindung betrifft ein Verfahren zum Herstellen endodontischer Instrumente aus einem stab- oder drahtförmigen Rohling, die Verwendung eines Fräsverfahrens zur Bearbeitung und/oder, Fertigung von endodontischen Instrumenten

Endodontische Instrumente werden insbesondere bei einer dentalen Wurzelkanalbehandlung eingesetzt. Mit ihnen wird der erkrankte Wurzelkanal aufbereitet. Diese Instrumente können beispielsweise kleine Räumer, Bohrer und Feilen in unterschiedlichsten geometrischen Formen und Ausführungen sein.

Endodontische Instrumente werden üblicherweise aus stab- oder drahtförmigen Rohlingen mit einem Durchmesser von etwa 0,3 bis 3 mm gefertigt. Die Herstellung dieser Instrumente ist relativ komplex und erfolgt durch aufwendige schleifende Verfahren. Es wird versucht, durch Verwendung von kompliziert auf den Prozess abgestimmten Schleifscheiben mit speziell definierten Parametem zufriedenstellende Ergebnisse zu erzielen.

Aus US-A-5 655 950 ist bekannt, endodontische Instrumente aus einer Metalllegierung aus Nickel- und Titananteilen durch Schleifen zu fertigen. Parameter, wie der relativ geringer Vorschub von beispielsweise bis 250 mm/min bei exakt einzuhaltender Umfangsgeschwindigkeit der Schleifscheibe, erfordern einen hohen Fertigungsaufwand pro Instrument. Nachteilig an diesem Verfahren ist, dass bedingt durch die Superelastizität der Nickel-Titan-Legierungen leicht Mikrorisse entstehen. Die Bildung von Mikrorissen wird auch dadurch begünstigt, dass die Schleifkörner keine regelmäßige Geometrie aufweisen und mit hoher Schleifgeschwindigkeit gearbeitet wird.

Die US 4,611,509 beschreibt ein Verfahren für die Fertigung eines zahnärztlichen Werkzeugs zum Ausbohren des Zahnwurzelkanals unter Verwendung einer rotierenden Schleifscheibe.

Die Bearbeitung von Metall-Rohlingen mit größeren Abmessungen als einigen Millimetern durch spanende Formgebung mit geometrisch bestimmter Schneide und schneidendem Abtrag, beispielsweise Fräsen, Bohren, Schneiden, Drehen, ist auf anderen Gebieten der Technik bekannt. Der Erfolg von spanabhebender Bearbeitung von Metall-Rohlingen durch Fräsen ist hierbei allerdings abhängig von den Materialeigenschaften des Metall-Rohlings.

Bekannt ist auch die Bearbeitung von Metall-Rohlingen durch High-speed-cutting-Fräsen (HSC-Fräsen). Dieses Fräsverfahren zeichnet sich durch eine hohe Schnittgeschwindigkeit aus, die die Wärmeabfuhr über die abgehobenen Späne erlaubt.

Der Erfindung liegt die Aufgabe zugrunde, endodontische Instrumente hoher Qualität in wirtschaftlicher Weise herzustellen.

Erfindungsgemäß wird diese Aufgabe durch die Bereitstellung eines Verfahrens gelöst, wie es in den Ansprüchen 1 and 11 beschrieben ist.

Die endodontischen Instrumente werden hierbei durch High-Speed-Cutting-Fräsen unter Verwendung von Fräsem mit geometrisch bestimmter Schneide und schneidendem Abtrag hergestellt.

Das erfindungsgemäße Verfahren weist dabei folgende Vorteile auf:

Während sich bei dem bekannten Fertigen endodontischer Instrumente durch Schfeifen die Schleifscheiben durch schabenden Materialabirag zusetzen, setzen sich bei dem erfindungsgemäßen Verfahren durch den schneidenden Materialabtrag die Schneiden der Fräser nicht mit Spänen zu. Dies ermöglicht die exakte und definierte Herstellung und Bearbeitung einer Vielzahl endodontischer Instrumente ohne Reinigung und/oder Auswechslung der Fräser.

Bei der Verwendung von beispielsweise Titan-beschichteten Hartmetallfräsem kann eine besonders hohe Standzeit bei gleichbleibender Schnittqualität erreicht werden. Dies führt zu einer Minimierung der Werkzeugkosten während des Fertigungsprozesses.

Vorteilhaft ist auch, dass die beim Schleifen häufig beobachteten Mikrorisse im bearbeiteten Material bei Anwendung des vorliegenden Verfahrens im wesentlichen vermieden werden können.

Der Draht oder Rohling wird vorzugsweise in einer speziellen Halterung geführt und kann über eine Stützeinrichtung in optimaler Position zu den Schneiden des Fräsers gehalten werden. Diese Halterung umfasst vorzugsweise eine Lochblende zur definierten Führung des Drahtes. Dabei setzt der Fräser vorzugsweise leicht außermittig an, um qualitativ schlechten Abtrag im Bereich niedriger Schneidengeschwindigkeit in der Fräsermitte zu verhindern. Die Stützeinrichtung weist vorzugsweise einen Block mit einer dem Durchmesser des Rohlings oder Werkstücks angepassten Rinne auf. Der Rohling wird vorzugsweise während der Bearbeitung in dieser Rinne geführt und gestützt, so dass er dem Fräser nicht ausweichen kann. Der Block kann durch eine Feder, durch einen Stellmotor, hydraulisch oder pneumatisch radial nachgeführt werden, um eine eventuelle Durchmesserverringerung auszugleichen, die durch das Fräsen bewirkt werden könnte. Die Nachführung der Stützeinrichtung erfolgt zweckmäßigerweise elastisch und radial zum stab- oder drahtförmigen Rohling.

Selbst bei hohen Schnittgeschwindigkeiten im Bereich von 10 bis 300 m/min, vorzugsweise im Bereich von 50 bis 200 m/min und damit verbunden schnellen Vorschüben ist der Wärmeeintrag in den Werkstoff gering, da durch das Fräsverfahren die entstehende Wärme über den Span abgeführt wird. Dadurch sind die Gefügeänderungen im Werkstoff trotz hoher und wirtschaftlicher Abtragsraten sehr gering und führen somit nicht zu einer Verschlechterung der ursprünglichen Werkstoffeigenschaften. Die vom Anwender gewünschte Superelastizität des endodontischen Instruments bleibt in vollem Umfang erhalten.

Ferner ist die Oberflächengüte im Mikrobereich sehr hochwertig, da durch die schneidende Bearbeitung die Kerbbildung im Material stark reduziert ist. Dadurch lassen sich exakte, definiert scharfe Schneidkanten ohne das Auftreten von Ausbrüchen generieren, wodurch eine für den Anwender positive Qualität hinsichtlich Schärfe und Schnittleistung resultiert.

Schließlich ermöglicht das erfindungsgemäße Verfahren die Realisierung von unerwartet hohen Vorschubgeschwindigkeiten des Werkstückes von bis zu 2000 mm/min, wodurch die Herstellungszeitdauer pro Instrument stark reduziert werden kann. Als vorteilhaft haben sich Vorschubgeschwindigkeiten im Bereich von 20 mm/min bis 1000 mm/min erwiesen.

Zusätzlich ist der gesamte Tiefenabtrag zur Ausformung des Schaftes oder der Nuten innerhalb eines Vorschubvorganges möglich, so dass nicht wie bei schleifenden Verfahren häufig üblich, zwei- oder dreimal über dieselbe Rohlings- bzw. Drahtstelle gefahren werden muss. Die mögliche Jahresstückzahl pro Anlage ist aus diesen Gründen um einen Faktor von bis zu fünf größer, als bei üblichen schleifenden Verfahren, obwohl die Maschineninvestitionskosten auf vergleichbarem Niveau liegen.

Bei der Verwendung CNC-gesteuerter Fräsmaschinen (CNC = Computer Numerik Control) ist durch einfache Programmänderung jede erdenkliche Form von endodontischen Instrumenten mit einem Maschinentyp realisierbar. Durch leichten Eingriff in die Fertigungsparameter (Programmänderung) entfallen kostenaufwendige, maschinenspezifische Umbauten.

Durch HSC-Fräsen lassen sich insbesondere auch superelastische Nickel-Titan-Legierungen in unerwarteter Weise mit hohen Schnittgeschwindigkeiten rasch und exakt zerspanen. Das Verfahren eignet sich aber auch zum Bearbeiten von zugfesten, gegebenenfalls auch gehärteten Materialien, wie Stahl und Graphit.

Weitere Vorteile dieses Verfahrens sind die leichte Erstellung auch komplexer Geometrien in einem stabförmigen Rohling oder Draht durch flexible Positionierung des Fräsers. Durch das erfindungsgemäße Verfahren lassen sich alle sinnvollen Oberflächengeometrien, wie Nuten, Schäfte und Wendeln fräsen.

Geeignete Fräswerkzeuge sind beispielsweise als Zweischneider mit Standardschneiden ausgebildet und sind vorzugsweise beschichtet mit beispielsweise Titannitrit (TIN), Titancarbonitrid (TICN), Titanaluminiumnitrid (TIALN), CBN und polykristalliner Diamant (PKD). Ein üblicher Durchmesser von einem geeigneten Stimfräser liegt im Bereich 0,3 bis 3 mm, vorzugsweise im Bereich von 0,5 bis 2 mm. Ein Anstellwinkel der Fräswerkzeuge im Bereich von 5 bis 30°, vorzugsweise im Bereich von 10 bis 20° hat sich als günstig erwiesen.

Der Querschnitt des stab- oder drahtförmigen Rohlings kann dabei abgerundet (kreisförmig oder eliptisch) oder eckig (quadratisch, rechteckig oder dreieckig) sein.

Die Erfindung wird nachfolgend durch Ausführungsbeispiele erläutert, ohne dass sie durch diese beschränkt sein soll.

Es zeigen:
- Fig. 1:: in einer Seitenansicht eine HSC-Fräsanlage, wobei die Bearbeitung eines Rohlings mittels zentrisch angeordnetem Fräser erfolgt;
- Fig. 2:: die HSC-Fräsanlage von Fig. 1 in Draufsicht;
- Fig. 3:: in einer Seitenansicht eine HSC-Fräsanlage, wobei die Bearbeitung eines Rohlings mittels außermittig angeordnetem Fräser erfolgt;
- Fig. 4:: die HSC-Fräsanlage von Fig. 3 in Draufsicht;

- Fig. 5:: in einer Detailansicht von Fig. 4 den Fräsbereich incl. Fräser und Stützeinrichtung;
- Fig. 6:: in einer Seitenansicht eine HSC-Fräsanlage, wobei die Bearbeitung eines Rohlings mittels winkelig angestelltem Fräser erfolgt;
- Fig. 7:: die HSC-Fräsanlage von Fig. 6 in Draufsicht;
- Fig. 8:: in einer Seitenansicht eine HSC-Fräsanlage, wobei die Bearbeitung eines Rohlings mittels eines als Walzenfräser angestellten Fräsers erfolgt;
- Fig. 9:: die HSC-Fräsanlage von Fig. 8 in Draufsicht.

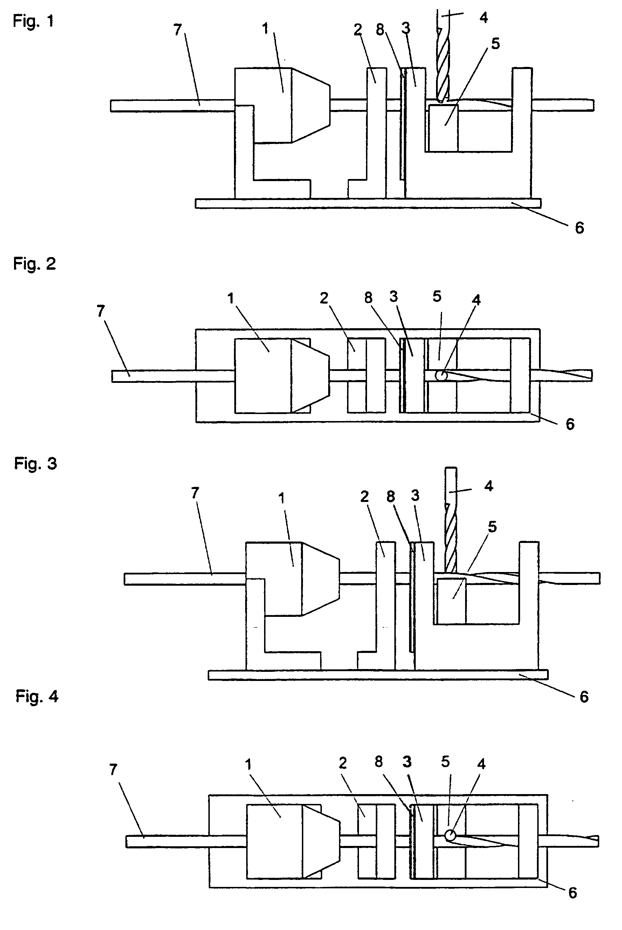

Bei den in den Figuren 1 bis 9 dargestellten Ausführungsbeispielen wird ein stabförmiger Rohling 7 aus einer superelastischen Nickel-Titan-Legierung in einer Fräsanlage mittels eines HSC-Fräsers 4 bearbeitet. Die Fräsanlage weist eine Grundplatte 6 auf, auf der eine Führungsaufnahme 3 mit einer integrierten Schneideinrichtung 8 und mit einer kontinuierlichen Stützeinrichtung 5 zur Führung des Rohlings 7 sowie eine übliche Vorschubeinheit bestehend aus Spannfutter 1 und Gegenhalter 2 untergebracht sind. Der Fräser 4 wird von einer üblichen Frässpindel getragen, die nicht dargestellt ist. Er hat seinen Arbeitsbereich genau im Bereich der Stützeinrichtung 5.

Bei der Bearbeitung wird der links dargestellte Rohling 7 zwischen dem Spannfutter 1 und dem Gegenhalter 2 über eine gesamte Bearbeitungslänge nachgezogen. Der Gegenhalter 2 öffnet und das drehbar gelagerte Spannfutter 1 schiebt den Rohling 7 dann bis in den Arbeitsbereich des Fräsers 4, der das Ende des rotierenden Rohlings 7 mit der gewünschten Geometrie versieht. Anschließend wird in den Rohling 7 die gewünschte Oberflächengeometrie eingebracht. Hierbei wird unter einer Drehbewegung des Spannfutters 1, kombiniert mit einer linearen Vorschubbewegung, die Fräsbahn generiert. Um eine hohe Präzision zu gewährleisten, findet die Bearbeitung in einem Durchgang statt. Ist die Bearbeitung abgeschlossen, kann mit dem Fräser 4 oder einer Schneideinrichtung 8 das Werkstück abgetrennt werden.

Mit verschiedenen Fräsergeometrien und Positionen relativ zum Werkstück oder unterschiedlichen Ansatzwinkeln des Fräsers 4 können unterschiedliche Geometrien in den Rohling 7 eingebracht werden. Die Variationen ermöglichen eine Optimierung der Schneidengeometrie des zu fertigenden endodontischen Instruments.

Bei dem Ausführungsbeispiel der Fig. 1 und 2 ist der Fräser rechtwinklig und mittig an den Rohling 7 angesetzt. In der Mitte des Fräsers 4 ist die Schnittgeschwindigkeit sehr klein, so dass hier Mikrorisse im Material des Rohlings 7 auftreten können. Bei manchen Instrumenten können solche Mikrorisse tolerierbar sein. Der Bereich solcher Mikrorisse kann auch in einem zweiten Durchgang überarbeitet werden.

Bei dem Ausführungsbeispiel der Fig. 3 bis 5 ist der Fräser rechtwinklig und außermittig angesetzt. Der zentrumsnahe Bereich des Fräsers 4 berührt daher den Rohling nicht, so dass die Schneiden des Fräsers 4 an den Berührungspunkten mit dem Rohling 7 immer eine hohe Schnittgeschwindigkeit haben.

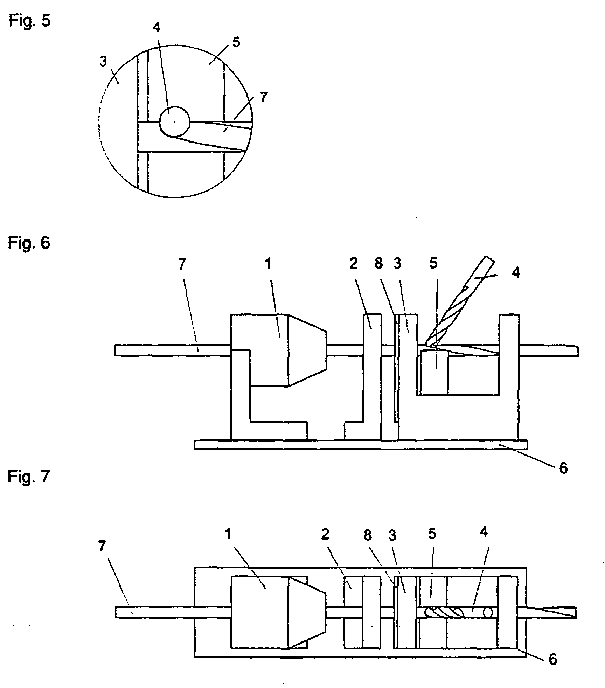

In den Fig. 6 und 7 ist der Fräser 4 mittig und unter einem Winkel angestellt.

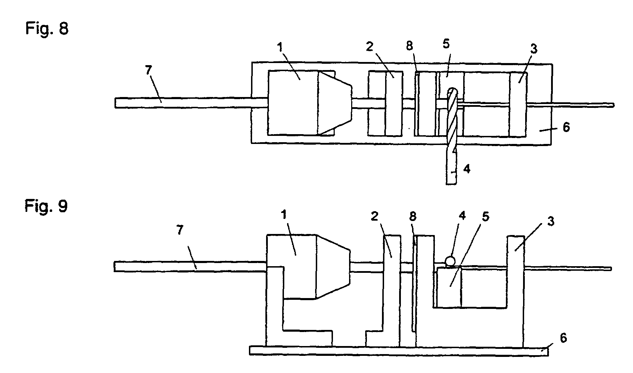

Die Fräserpositionen der Fig. 1 bis 7 eignen sich vor allem zum Einbringen von Nuten. In Fig. 8 und 9 wird ein Walzenfräser 4 verwendet. Mit dieser Anordnung kann insbesondere ein Materialabtrag auf dem Umfang realisiert werden. Ebenso ist dies bei den Anordnungen der Figur 1 bis 5 durch Verwendung eines Stimschaftfräsers möglich.

Für die Bearbeitung haben sich folgende Parameter als praktikabel erwiesen: In Abhängigkeit von der Fräsergröße kann die Schnittgeschwindigkeit V_{c} zwischen 20 und 200 m/min gewählt werden, der Vorschub f_{z} pro Zahn oder Schneide des Fräser liegt zweckmäßig zwischen 0,5 und 100 µm/Zahn (kombinierte Bewegung aus linearem Vorschub und Drehung des Rohlings), wobei die Vorzugswerte für V_{c} ≈ 50 m/min und f_{z} ≈ 5 µm sind.

## Patentansprüche

1. Verfahren zur Bearbeitung und/oder Fertigung endodontischer Instrumente aus einem stab- oder drahtförmigen Rohling (7), umfassend als Werkstoff eine Nickel-Titan-Lagierung, **dadurch gekennzeichnet, dass** zur Formgebung ein High-Speed-Cutting-Fräsverfahren mit geometrisch bestimmter Schneide und schneidendem Abtrag verwendet wird.

2. Verfahren nach Anspruch 1, **dadurch gekennzeichnet, dass** die Schnittgeschwindigkeit V_{c} im Bereich von 10 m/min bis 300 m/min liegt.

3. Verfahren nach einem der Ansprüche 1 bis 2, **dadurch gekennzeichnet, dass** die Vorschubgeschwindigkeit des Werkstücks bis zu 2000 mm/min beträgt.

4. Verfahren nach einem dar Ansprüche 1 bis 3, **dadurch gekennzeichnet, dass** der Rohling (7) auf der dem Fräser (4) gegenüberliegenden Seite abgestützt wird.

5. Verfahren nach Anspruch 4, **dadurch gekennzeichnet, dass** die Abstützung (5) des Rohlings (7) elastisch erfolgt.

6. Verfahren nach Anspruch 4 oder 5, **dadurch gekennzeichnet, dass** der Rohling (7) in einer Führungsaufnahme (3) geführt wird, die die Abstützung (5) umfasst.

7. Verfahren nach einem der Ansprüche 1 bis 6, **dadurch gekennzeichnet, dass** der Fräser (4) außermittig über der Werkstücklängsachse angesetzt wird.

8. Verfahren nach einem der Ansprüche 1 bis 7, **dadurch gekennzeichnet, dass** der Fräser (4) rechtwinklig und mittig an den Rohling (7) ansetzt.

9. Verfahren nach einem der Ansprüche 1 bis 8, **dadurch gekennzeichnet, dass** der Fräser (4) mittig und unter einem Winkel angestellt an den Rohling (7) ansetzt.

10. Verfahren nach einem der Ansprüche 1 bis 9, **dadurch gekennzeichnet, dass** es sich bei dem Fräser (4) um einen Walzenfräser oder Stimschaftfräser handelt.

11. Verwendung eines High-Speed-Cutting Fräsverfahrens mit geometrisch bestimmter Schneide und schneidendem Abtrag zur Bearbeitung und/oder Fertigung endodontischer Instrumente umfassend als Werkstoff eine Nickel-Titan-Legierung.

## Claims

1. Method for machining and/or manufacturing endodontic instruments from a blank (7) in rod or wire form, comprising a nickel-titanium alloy as material, **characterized in that** a high-speed-cutting milling method using a geometrically defined cutting edge and cutting removal is used for shaping.

2. Method according to Claim 1, **characterized in that** the cutting speed V_{c} is in the range from 10 m/min to 300 m/min.

3. Method according to one of Claims 1 to 2, **characterized in that** the feed rate of the workpiece is up to 2000 mm/min.

4. The method according to one of Claims 1 to 3, **characterized in that** the blank (7) is supported on the side which lies opposite the milling cutter (4).

5. Method according to Claim 4, **characterized in that** the blank (7) is supported (5) elastically.

6. Method according to Claim 4 or 5, **characterized in that** the blank (7) is guided in a guide receptacle (3) which comprises the support means (5).

7. Method according to one of Claims 1 to 6, in which the milling cutter (4) is fitted eccentrically above the workpiece longitudinal axis.

8. Method according to one of Claims 1 to 7, **characterized in that** the milling cutter (4) moves onto the blank (4) centrally and at right angles.

9. Method according to one of Claims 1 to 8, **characterized in that** the milling cutter (4) moves onto the blank (7) centrally and set at an angle.

10. Method according to one of Claims 1 to 9, **characterized in that** the milling cutter (4) is a cylindrical milling cutter or a shank face-milling cutter.

11. Use of a high-speed-cutting milling method using a geometrically defined cutting edge and cutting removal for the machining and/or manufacture of endodontic instruments comprising a nickel-titanium alloy as material.

## Revendications

1. Procédé d'usinage et/ou de fabrication d'instruments endodontiques constitués d'une ébauche en forme de barre ou de fil métallique (7), comprenant, en tant que matériau, un alliage nickel titane, **caractérisé en ce que** pour le façonnage, on utilise un procédé de fraisage à grande vitesse de coupe avec un tranchant de géométrie déterminée et un enlèvement de matière par découpe.

2. Procédé selon la revendication 1, **caractérisé en ce que** la vitesse de coupe V_{c} est comprise dans la plage de 10 m/min à 300 m/min.

3. Procédé selon l'une quelconque des revendications 1 à 2, **caractérisé en ce que** la vitesse d'avance de la pièce vaut jusqu'à 2000 mm/min.

4. Procédé selon l'une quelconque des revendications 1 à 3, **caractérisé en ce que** l'ébauche (7) est supporté sur le côté opposé à la fraise (4).

5. Procédé selon la revendication 4, **caractérisé en ce que** le support (5) de l'ébauche (7) s'effectue de manière élastique.

6. Procédé selon la revendication 4 ou 5, **caractérisé en ce que** l'ébauche (7) est guidée dans un logement de guidage (3) qui comprend le support (5).

7. Procédé selon l'une quelconque des revendications 1 à 6, **caractérisé en ce que** la fraise (4) est inclinée de manière décentrée par rapport à l'axe longitudinal de la pièce.

8. Procédé selon l'une quelconque des revendications 1 à 7, **caractérisé en ce que** la fraise (4) est inclinée à angle droit et au centre sur l'ébauche (7).

9. Procédé selon l'une quelconque des revendications 1 à 8, **caractérisé en ce que** la fraise (4) s'applique au centre et avec un inclinaison suivant un certain angle sur l'ébauche (7).

10. Procédé selon l'une quelconque des revendications 1 à 9, **caractérisé en ce que** la fraise (4) est une fraise cylindrique ou une fraise à rainurer à bout.

11. Utilisation d'un procédé de fraisage à grande vitesse de coupe, avec un tranchant de géométrie déterminée et un enlèvement de matière par découpe pour l'usinage et/ou la fabrication d'instruments endodontiques dont le matériau est constitué d'un alliage de nickel titane.
